# EUROPÄISCHE PATENTSCHRIFT

(11) **EP 1 855 907 B1**
(45) Veröffentlichungstag und Bekanntmachung des Hinweises auf die Patenterteilung: **13.08.2008**
(21) Anmeldenummer: 06704726.6
(22) Anmeldetag: 24.02.2006
(51) Int. Cl.: B60K 17/346, B60K 17/16, B60K 23/04, B60K 23/08, F16H 48/22, F16H 48/30, F16H 57/04, F16H 1/20, F04C 2/10

(54) **DIFFERENTIALGETRIEBEEINHEIT FÜR KRAFTFAHRZEUGE MIT AKTIVER STEUERUNG DER ANTRIEBSKRAFTVERTEILUNG**
DIFFERENTIAL GEAR UNIT FOR MOTOR VEHICLES COMPRISING AN ACTIVE CONTROL MECHANISM FOR THE DRIVING FORCE DISTRIBUTION
UNITE DE DIFFERENTIEL DESTINEE A DES VEHICULES COMPORTANT UN MECANISME DE COMMANDE ACTIVE DE LA REPARTITION DE LA MOTRICITE

(30) Priorität: 25.02.2005 AT 1122005 U
(43) Veröffentlichungstag der Anmeldung: 21.11.2007
(73) Patentinhaber: Magna Steyr Fahrzeugtechnik AG & Co KG, 8041 Graz (AT)
(72) Erfinder: KASSLER, Helmut, A-8570 Voitsberg (AT)
(74) Vertreter: Harringer, Thomas
(86) Internationale Anmeldenummer: PCT/AT2006/000084
(87) Internationale Veröffentlichungsnummer: WO 2006/089334

(56) Entgegenhaltungen:
- EP-A- 1 502 800
- FR-A- 2 574 867
- US-A- 1 358 547
- US-A- 1 619 127
- US-A- 5 370 588
- PATENT ABSTRACTS OF JAPAN Bd. 018, Nr. 602 (M-1705), 16. November 1994 (1994-11-16) -& JP 06 227272 A (MITSUBISHI MOTORS CORP), 16. August 1994 (1994-08-16)

## Beschreibung

Die Erfindung betrifft eine Differentialgetriebeeinheit für Kraftfahrzeuge, bestehend aus einem Gehäuse und darin einem Differentialgetriebe, zwei Koaxialgetrieben und zwei steuerbaren Reibungskupplungen, wobei das Differentialgetriebe aus einem antreibbaren Glied (beispielsweise einem Differentialkorb) und einem ersten und zweiten Abtriebsglied, beispielsweise den Achswellen, besteht, wobei die Koaxialgetriebe nach Maßgabe der Stellung der Reibungskupplungen ein zusätzliches Drehmoment auf das erste beziehungsweise zweite Abtriebsglied übertragen.

Derartige Einheiten erlauben die aktive Steuerung der Antriebskraftverteilung zwischen den beiden Abtriebsgliedern. Das Koaxialgetriebe bewirkt eine Übersetzung ins Schnelle oder ins Langsame, sodass die zusätzliche Antriebskraft über die steuerbare Reibungskupplung je nach Fahrsituation dem jeweiligen Abtriebsglied zugemessen werden kann. In der Fachwelt wird das als "Torque Vectoring" bezeichnet.

Eine gattungsgemäße Differentialgetriebeeinheit ist aus der US 5,370,588, die alle Merkmale des Oberbegriffes des Anspruchs 1 offenbart, bekannt. Bei ihr sind die Koaxialgetriebe hohlradlos und dafür mit Doppelplaneten ausgestattet, und mit jeweils einer Seite der Kupplung drehfest verbunden. Diese Bauart bedingt eine erhebliche Einbaubreite, was jedenfalls ungünstig ist, besonders, wenn an die Achswellen homokinetische Gelenke anschließen. Das Koaxialgetriebe ist ein festachsiges Getriebe, dessen Ausgangs- und Eingangsglieder koaxial sind.

Weiters besteht eine solche Differentialgetriebeeinheit aus sehr vielen, schwierig zu lagernden und hochbelasteten Bauteilen und ist die Schmierung/Kühlung der tief im Inneren des Gehäuses untergebrachten Kupplung kritisch. Bei unzureichender Kühlung kann eine Reibungskupplung nicht längere Zeit mit Schlupf betrieben werden. Ihr Gebrauchswert ist damit stark eingeschränkt.

Es ist somit Aufgabe der Erfindung, eine gattungsgemäße Differentialgetriebeeinheit so weiterzubilden, dass sie bei geringstem Bauraum und Verschleiß sehr hohe Kräfte aufnehmen kann und auch dem Dauerbetrieb mit Schlupf standhält. Erfindungsgemäß wird das dadurch erreicht, dass die Koaxialgetriebe jeweils ein mit einer Seite der zugehörigen Reibungskupplung drehfest verbundenes als Hohlrad ausgebildetes erstes Glied und ein mit dem jeweiligen Abtriebsglied des Differentialgetriebes drehfest verbundenes konzentrisches zweites Glied aufweist, und dass das zweite Glied ein Sonnenrad und ein drittes Glied als Zahnring ausgebildet ist, dessen Achse bezüglich der des ersten und des zweiten Gliedes versetzt ist und der eine mit dem ersten Glied kämmende Aussenverzahnung und eine mit dem zweiten Glied kämmende Innenverzahnung aufweist.

So ist beiderseits ein sehr schmal bauendes einfaches Koaxialgetriebe in unmittelbarer Nähe der Kupplung vorgesehen, was insgesamt günstige Kraftverläufe ergibt, Bauraum erspart und eine gemeinsame Versorgung mit Schmier/Kühlöl erlaubt. Der Zahnring umgibt das Sonnenrad exzentrisch, in der Art eines Ölförderringes bei einem Gleitlager historischer Bauart, wobei er diese Wirkung auch tatsächlich ausüben kann. Diese besondere Getriebeform ist zwar an sich bekannt, siehe etwa die Patente US 1,619,127 oder US 773,227, nicht aber in Verbindung mit Reibungskupplungen zur Steuerung der Drehmomentverteilung und mit der der Erfindung zugrunde liegenden Aufgabenstellung.

Diese Getriebeform erlaubt es, die für diesen Zweck günstigen Übersetzungen auf sehr kleinem Raum zu verwirklichen, aus geometrischen Gründen und weil Innenverzahnungen sehr hohe Überdeckungsgrade ergeben (es sind viele Zähne gleichzeitig im Eingriff, auf die sich die zu übertragenden Kräfte verteilen). Der hohe Überdeckungsgrad erlaubt auch eine besonders schmale und damit raumsparende Ausführung der verzahnten Glieder. Die damit möglichen Übersetzungen erlauben eine optimale Auslegung der Reibungskupplung für die entsprechenden Drehzahldifferenzen, was zu deren Schonung beitragt und im Verband mit guter Schmierung/Kühlung diese für dauernden Schlupfbetrieb besonders geeignet macht.

In Weiterbildung der Erfindung, wobei die Reibungskupplungen jeweils aus einem Innenlamellen tragenden Primärteil und einem Aussenlamellen tragenden Sekundärteil (dem Aussenteil) bestehen, ist der Sekundärteil der Kupplung mit dem ersten Glied des jeweiligen Koaxialgetriebes baulich vereint (Anspruch 2). So entstehen einfache und schmale Baugruppen, die für beide Seiten gleich sind und in modularer Bauweise auch leicht für verschiedene Übersetzungen anpassbar und einsetzbar sind. Durch die Vereinigung beider Bauteile und die kleine Erstreckung in Achsrichtung werden auch besonders günstige Bedingungen für die Lagerung der rotierenden Teile geschaffen.

Das trifft in besonders hohem Maß zu, wenn der Sekundärteil der Kupplung eine Glocke bildet, an deren achsnormalen Teil das jeweilige Koaxialgetriebe anschließt und dass der Zahnring an seiner der Kupplung abgewandten Seite (der Aussenseite) einen Kragen aufweist, der im Gehäuse gelagert ist (Anspruch 3). So ist der Zahnring ein besonders einfacher Teil und präzise und fest im Gehäuse gelagert. Eine weitere Raumersparnis und Kostensenkung wird dadurch erreicht, dass der Kragen des Zahnringes selbst Lagerring eines Wälzlagers ist (Anspruch 4).

In einer besonders vorteilhaften Weiterbildung der Erfindung sind die Koaxialgetriebe mit ihren angrenzenden Wandteilen als Zahnrad-Ölpumpen ausgebildet (Anspruch 5). So wirkt das Koaxialgetriebe zusätzlich zu seiner Getriebefunktion auch noch als Ölpumpe. Dazu können die von Gerotor-Pumpen bekannten sichelförmigen Ausnehmungen in den angrenzenden Wänden vorgesehen sein. In einer speziellen Ausführungsform haben die Koaxialgetriebe zwischen dem ersten und/oder zweiten Glied und dem Zahnring einen sichelförmigen Block und sind in einem angrenzenden Gehäuseteil zwei Öffnungen vorgesehen, von denen Ölkanäle ausgehen, ein erster Kanal für die Zufuhr von Öl aus einem Ölsumpf und ein zweiter, der direkt oder indirekt eine Verbindung zur jeweiligen Kupplung herstellt (Anspruch 5). So wird die Förderwirkung des Zahnringes erheblich verstärkt. Dadurch und durch die Pumpwirkung können große Mengen Schmier/Kühlöl zur jeweiligen Reibungskupplung gefördert werden, was deren Dauerbetrieb unter Schlupf auch bei weiter gesteigerter Belastung sicherstellt.

Das so geförderte Öl könnte auch anderen Verwendungen zugeführt werden, etwa der Beaufschlagung der Reibungskupplungen. Dazu sind dann nur mehr die zur Steuerung von Ölkreisläufen nötigen Ventile und Kanäle vorzusehen. Die besondere Bauweise des Getriebes erlaubt sogar die Ölförderung in zwei sichelförmigen Gebieten, in zwei Druckstufen.

Im Folgenden wird die Erfindung anhand von Abbildungen einer bevorzugten Ausführungsform der Erfindung beschrieben und erläutert. Es stellen dar:
- Fig. 1: Eine Differentialgetriebeeinheit im Axialschnitt,
- Fig. 2: Detail A in Fig. 1, vergrößert,
- Fig. 3 : Querschnitt nach III-III in Fig. 1.

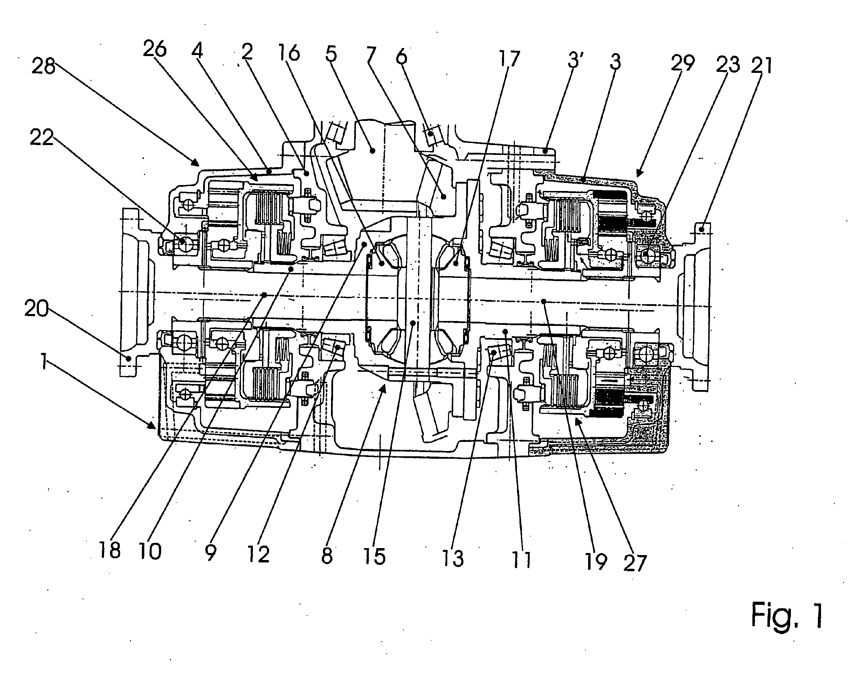

In **Fig. 1** ist das Gehäuse der erfindungsgemäßen Differentialgetriebeeinheit summarisch mit 1 bezeichnet. Es besteht aus einem Mittengehäuse 2 und einem rechten und linken Seitengehäuse 3, 4, welche mit einem Flansch (wie z.B. 3') am Mittengehäuse 2 angeschraubt sind. Das Mittengehäuse 2 enthält einen Triebling 5, dessen ein Lager 6 angedeutet ist, ein mit dem Triebling 5 kämmendes Tellerrad 7 und ein mit dem Tellerrad 7 drehfest verbundenes summarisch mit 8 bezeichnetes Differential.

Das Differential 8 besteht wie üblich aus einem Differentialkorb 9, darin einem Ausgleichsbolzen 15 mit auf ihm gelagerten Ausgleichskegelrädem und ein linkes und ein rechtes Abtriebskegelrad 16, 17. Der Differentialkorb 9 geht beiderseits in eine linke beziehungsweise rechte Hohlwelle 10, 11 über, welche in Lagern 12, 13 im Mittengehäuse 2 gelagert sind. Der Differentialkorb 9 mit seinen beiden Hohlwellen 10, 11 bildet das angetriebene Glied des Differentials 8. Im Inneren der Hohlwellen 10, 11 ist eine linke Achswelle 18 und eine rechte Achswelle 19. Die Achswellen 18, 19 sind die beiden Abtriebsglieder des Differentials und besitzen jeweils einen linken (20) und einen rechten Flansch 21, an die beispielsweise zu den Rädern einer Achse führende Antriebswellen über homokinetische Gelenke angebunden ist. Die Achswellen 18, 19 sind in Lagern 22, 23 in ihren jeweiligen Seitengehäusen 3, 4 gelagert. In dem linken Seitengehäuse 4 befindet sich weiters eine linke Reibungskupplung 26 und ein linkes Koaxialgetriebe 28, im rechten Seitengehäuse 3 eine rechte Reibungskupplung 27 und ein rechtes Koaxialgetriebe 29. Dabei steht der Begriff Koaxialgetriebe für festwellige Getriebe, deren Eingangs- und Ausgangsglieder koaxial sind. Die beiden Seitengehäuse 3, 4 mit allen ihren im folgenden beschriebenen Einbauten sind identisch.

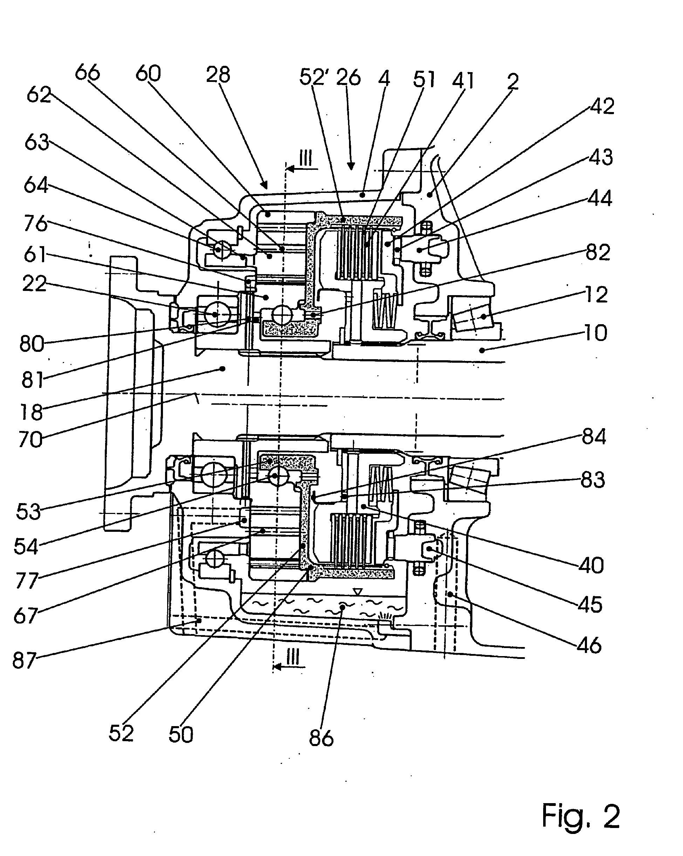

**Fig. 2** zeigt das linke Seitengehäuse 4 mit seinem Inhalt. Die Reibungskupplung 26 besteht aus einem drehfest auf der linken Hohlwelle 10 sitzenden Primärteil 40 und aus einem diesen glockenförmig umgebenden Sekundärteil 50. Der Primärteil 40 hat drehfest auf ihm sitzende Primärlamellen 41 und eine Druckplatte 42, welche über ein Nadellager 43 von einem Ringkolben 44 steuerbar beaufschlagt ist. Der Ringkolben 44 schließt einen ringförmigen Druckraum 45 ab, dem über einen Druckkanal 46 Drucköl gesteuert zugeführt wird. Im Sekundärteil 50 sind Sekundärlamellen 51 drehfest angebracht. Der glockenförmige Sekundärteil 50 besteht aus einem ungefähr in einer achsnormalen Ebene liegenden Boden 52 und einem die Sekundärlamellen aufnehmenden zylindrischen Teil 52'. An seinem inneren Rand geht der Boden 52 in einen Lagerflansch 53 über, der Teil eines Rillenkugellagers 54 ist.

Das Koaxialgetriebe 28 besteht aus einem Hohlrad 60 mit Innenverzahnung, das drehfest mit dem Sekundärteil 50 der Reibungskupplung 26 verbunden ist, aus einem mit der linken Achswelle 18 drehfest verbundenen Sonnenrad 61 und aus einem Zahnring 62. Das auf dem Rillenlager 54 gelagerte Hohlrad 60 ist das erste Glied, das Sonnenrad 61 das zweite Glied und der Zahnring 62 ist das dritte Glied des Koaxialgetriebes 28. Der Zahnring hat eine mit dem Hohlrad 60 kämmende Außenverzahnung 66 und eine mit dem Sonnenrad 61 kämmende Innenverzahnung 67 und umgibt das Sonnenrad 61. Er ist mittels eines Rillenkugellagers 64 exzentrisch im Gehäuse 4 gelagert.

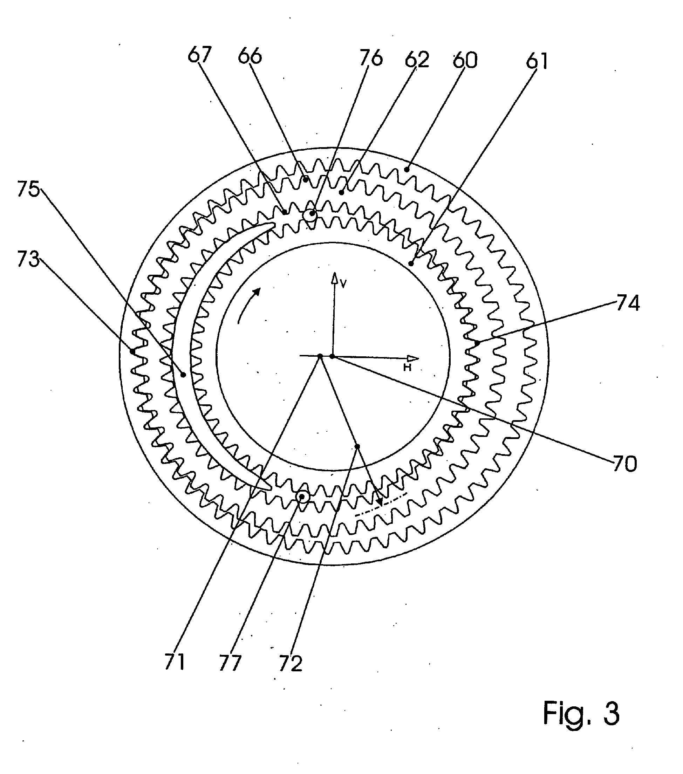

In **Fig. 3** ist das besser zu erkennen. Die Drehachse von Hohlrad 60 und Sonnenrad 61 ist mit 70 bezeichnet, die Achse des Zahnringes 62 und seines Rillenkugellagers 64 mit 71 und der zugehörige Radiusstrahl mit 72. Dank der Exzentrizität der Achse 71 kämmt die Außenverzahnung 66 in der Umgebung des Punktes 73 mit der Innenverzahnung des Hohlrades 60 und kämmt die Innenverzahnung 67 des Zahnringes 62 in der Umgebung eines diametral gegenüberliegenden Punktes 74 mit dem Sonnenrad 61. Der zwischen dem Sonnenrad 61 und dem Zahnring 62 gebildete sichelförmige Hohlraum enthält eine sichelförmige Insel 75. Diese Insel 75 ist fest mit dem Gehäuse 4 verbunden, welches weiters an ungefähr diametral entgegengesetzt gelegenen Punkten eine erste Öffnung 76 und eine zweite Öffnung 77 hat. So wirkt das Koaxialgetriebe als Zahnradpumpe, die durch die untenliegende Öffnung 77 Öl ansaugt und es durch die obengelegene Öffnung 76 unter Druck abgibt.

In **Fig. 2** sind diese Öffnungen und die daran anschließenden Ölkanäle erkennbar. Von der ersten Öffnung 76 führt unter Zwischenschaltung eines kleinen und daher nicht erkennbaren Ringraumes zumindest ein Schmierölkanal 80 im Sonnenrad 61 radial einwärts. Durch weitere Öffnungen 81 im Sonnenrad 61, 82 im Boden des Sekundärteiles 52 der Kupplung und 83 im Primärteil der Kupplung gelangt das Schmieröl als Kühlmittel direkt zu den Lamellen 41, 51 der Kupplung 26. Im Primärteil 40 der Reibungskupplung 26 ist ein ringförmig umlaufendes Ölhalteblech 84 vorgesehen, das das aus der Öffnung 82 austretende Öl auffangt und - unterstützt durch Fliehkraft - in die Öffnung 83 leitet. Zur Ansaugöffnung 77 gelangt Öl aus einem Sumpf 86 über einen im Gehäuse geführten Saugkanal 87, strichliert angedeutet.

Die erfindungsgemäße Differentialgetriebeeinheit arbeitet wie folgt: Im neutralen Zustand, das heißt bei ganz geöffneten Kupplungen 26, 27, wird die Antriebskraft in der bekannten Manier vom Differential 8 auf die beiden Achswellen 18, 19 verteilt. Diese und mit ihnen das jeweilige Sonnenrad drehen sich mit der sich über das Differential 8 einstellenden Drehzahl. Auf die linke Achswelle 18 bezogen, treibt das Sonnenrad 61 über die Übersetzung des Koaxialgetriebes 28 dessen Hohlrad 60 und damit den Sekundärteil 50 der Kupplung 26 mit geringerer Drehzahl leer mit, da die Kupplung 26 ja ganz geöffnet ist. Soll nun das der linken Achswelle 18 zugeführte Drehmoment erhöht werden, so wird die Kupplung 26 in dem erforderlichen Maße im Schließsinn angesteuert, wodurch der Sekundärteil 50 der Kupplung, der sich anfangs langsamer als der Primärteil 40 der Kupplung dreht, mitgenommen. Dabei wird ein Drehmoment auf ihn übertragen. Dieses wird über das Koaxialgetriebe 28 in dessen Sonnenrad 61 eingeleitet und damit als zusätzliches Drehmoment der linken Achswelle 18.

Die Übersetzung der Koaxialgetriebe und deren Auslegung kann in einem weiten Bereich den in Frage kommenden fahrdynamischen Anforderungen eines Kraftfahrzeuges angepasst werden. Eine Übersetzung der dazu erforderlichen Größenordnung ist dank der besonderen Gestaltung der Koaxialgetriebe 28, 29 bei optimaler Auslegung der Verzahnung konstruktiv möglich geworden. Am Rande ist zu vermerken, dass die erfindungsgemäße Differentialgetriebeeinheit auch ohne Antrieb durch entsprechende Ansteuerung der Reibungskupplungen Drehmomente zwischen den beiden Achswellen übertragen kann.

Die beschriebene Differentialgetriebeeinheit ist ein Ausführungsbeispiel, von dem in vieler Hinsicht abgewichen werden kann. So kann das Kegelraddifferential 8 durch ein Differential anderer Bauart, etwa ein parallelachsiges Planetendifferential ersetzt sein. Auch kann die beschriebene Differentialgetriebeeinheit nicht nur als Achsdifferential sondern auch als Zentraldifferential, das heißt zur Verteilung einer Antriebskraft auf zwei Achsen eines Kraftfahrzeuges angewendet werden. In diesem Fall kann das Differential auch eine andere als ebenmäßige Kraftverteilung bewirken.

## Patentansprüche

1. Differentialgetriebeeinheit für Kraftfahrzeuge, bestehend aus einem Gehäuse und darin einem Differentialgetriebe (8), zwei Koaxialgetrieben, die als festwellige Getriebe mit koaxialen Eingangs- und Ausgangsgliedern ausgebildet sind, und zwei steuerbaren Reibungskupplungen, wobei das Differentialgetriebe aus einem antreibbaren Glied (9) und einem ersten und zweiten Abtriebsglied (18,19) besteht, und wobei die Koaxialgetriebe nach Maßgabe des Einrückgrades der Reibungskupplungen ein zusätzliches Drehmoment auf das erste beziehungsweise zweite Abtriebsglied (18,19) übertragen, **dadurch gekennzeichnet,**
a) **dass** die Koaxialgetriebe (28,29) jeweils ein mit einer Seite der zugehörigen Reibungskupplung (26,27) drehfest verbundenes als Hohlrad (60) ausgebildetes erstes Glied und ein mit dem jeweiligen Abtriebsglied (18,19) drehfest verbundenes zweites Glied (61) aufweisen, und
b) **dass** das zweite Glied (61) jedes Koaxialgetriebes (28,29) ein Sonnenrad ist und ein drittes Glied (62) als Zahnring ausgebildet ist, dessen Achse (71) bezüglich der Achse (70) des ersten und des zweiten Gliedes versetzt ist und der eine mit dem ersten Glied (60) kämmende Aussenverzahnung (66) und eine mit dem zweiten Glied (61) kämmende Innenverzahnung (67) aufweist.

2. Differentialgetriebeeinheit nach Anspruch 1, wobei die Reibungskupplungen (26,27) jeweils aus einem Innenlamellen (41) tragenden Primärteil (40) und einem Aussenlamellen (51) tragenden Sekundärteil (50) besteht, **dadurch gekennzeichnet, dass** der Sekundärteil (50) mit dem ersten Glied (60) des jeweiligen Koaxialgetriebes (28,29) baulich vereint ist.

3. Differentialgetriebeeinheit nach Anspruch 2, **dadurch gekennzeichnet, dass** der Sekundärteil (50) der Kupplung (26,27) eine Glocke (52,52') bildet, an dessen achsnormalen Teil (52) das jeweilige Koaxialgetriebe (28,29) anschließt und dass der Zahnring (62) an seiner der Kupplung (26,27) abgewandten Seite einen Kragen (63) aufweist, der im Gehäuse (4) gelagert ist.

4. Differentialgetriebeeinheit nach Anspruch 3, **dadurch gekennzeichnet, dass** der Kragen (63) des Zahnringes (62) selbst Lagerring eines Wälzlagers (64) ist.

5. Differentialgetriebeeinheit nach Anspruch 1, **dadurch gekennzeichnet, dass** die Koaxialgetriebe (28,29) mit ihren angrenzenden Wandteilen (4,52) als Zahnrad-Ölpumpen ausgebildet sind.

6. Differentialgetriebeeinheit nach Anspruch 5, **dadurch gekennzeichnet, dass** die Koaxialgetriebe (28,29) zwischen dem ersten (60) und/oder dem zweiten Glied (61) und dem Zahnring (62) eine sichelförmige Insel (75) haben und dass in einem angrenzenden Teil des Gehäuses (4) zwei Öffnungen (76,77) vorgesehen sind, von denen Ölkanäle (80,87) ausgehen, ein erster Kanal (87) für die Zufuhr von Öl aus einem Ölsumpf (86) und ein zweiter (80), der direkt oder indirekt eine Verbindung zur jeweiligen Kupplung (26,27) herstellt.

7. Differentialgetriebeeinheit nach Anspruch 6, **dadurch gekennzeichnet, dass** die sichelförmige Insel (75) zwischen dem zweiten Glied (61) und dem Zahnring (62) gebildet und am Gehäuse (4) befestigt ist.

## Claims

1. Differential gearing unit for motor vehicles, composed of a housing and, in the latter, a differential gearing (8), two coaxial gearings which are embodied as fixed-shaft gearings with coaxial input and output elements, and two controllable friction clutches, with the differential gearing being composed of a drivable element (9) and a first and second drive output element (18,19), and with the coaxial gearings transmitting an additional torque to the first and to the second drive output element (18,19) respectively according to the degree of engagement of the friction clutches, **characterized**
a) **in that** the coaxial gearings (28,29) have in each case one first element, which is rotationally fixedly connected to one side of the associated friction clutch (26,27) and which is embodied as a ring gear (60), and one second element (61) which is rotationally fixedly connected to the respective drive output element (18,19), and
b) **in that** the second element (61) of each coaxial gearing (28,29) is a sun gear and a third element (62) is embodied as a toothed ring whose axis (71) is offset with respect to the axis (70) of the first and of the second element and which has an outer toothing (66) which meshes with the first element (60) and an inner toothing (67) which meshes with the second element (61).

2. Differential gearing unit according to Claim 1, with the friction clutches (26,27) being composed in each case of a primary part (40) which supports inner plates (41) and a secondary part (50) which supports outer plates (51), **characterized in that** the secondary part (50) is in a structural unit with the first element (60) of the respective coaxial gearing (28,29).

3. Differential gearing unit according to Claim 2, **characterized in that** the secondary part (50) of the clutch (26,27) forms a bell (52,52') whose part (52) which is normal to the axis is adjoined by the respective coaxial gearing (28,29), and **in that** the toothed ring (62) has, at its side facing away from the clutch (26,27), a collar (63) which is mounted in the housing (4).

4. Differential gearing unit according to Claim 3, **characterized in that** the collar (63) of the toothed ring (62) is itself a bearing ring of a rolling bearing (64).

5. Differential gearing unit according to Claim 1, **characterized in that** the coaxial gearings (28,29) are formed with their adjoining wall parts (4,52) as gearwheel oil pumps.

6. Differential gearing unit according to Claim 5, **characterized in that** the coaxial gearings (28,29) have a sickle-shaped island (75) between the first (60) and/or the second element (61) and the toothed ring (62), and **in that** two openings (76,77) are provided in an adjoining part of the housing (4), from which openings (76,77) extend oil ducts (80,87), a first duct (87) for the supply of oil from an oil sump (86) and a second (80) which directly or indirectly produces a connection to the respective clutch (26,27).

7. Differential gearing unit according to Claim 6, **characterized in that** the sickle-shaped island (75) is formed between the second element (61) and the toothed ring (62) and is fastened to the housing (4).

## Revendications

1. Unité de transmission différentielle pour véhicules automobiles, composée d'un boîtier où sont placés une transmission différentielle (8), deux transmissions coaxiales qui sont réalisées sous forme de transmissions à arbre fixe dotées d'éléments coaxiaux d'entrée et de sortie et deux embrayages à friction contrôlables, la transmission différentielle étant composée d'un élément pouvant être entraîné (9) et d'un premier et deuxième élément de prise de mouvement (18, 19) et les transmissions coaxiales transmettant, en fonction du degré d'embrayage des embrayages à friction, un couple de rotation supplémentaire au premier ou au deuxième élément de prise de mouvement (18, 19), **caractérisée en ce que**
a) les transmissions coaxiales (28, 29) présentent respectivement un premier élément réalisé sous forme de couronne (60) et relié de manière fixe en rotation à un côté de l'embrayage à friction correspondant (26, 27) et un deuxième élément (61) relié de manière fixe en rotation à l'élément de prise de mouvement respectif (18, 19) et que
b) le deuxième élément (61) de chaque transmission coaxiale (28, 29) est un pignon planétaire et qu'un troisième élément (62) est réalisé sous forme d'un anneau denté dont l'axe (71) est décalé par rapport à l'axe (70) du premier et du deuxième élément et qui présente une denture extérieure (66) s'empeignant avec le premier élément (60) et une denture intérieure (67) s'empeignant avec le deuxième élément (61).

2. Unité de transmission différentielle selon la revendication 1, dans laquelle les embrayages à friction (26, 27) sont composés respectivement d'une pièce primaire (40) supportant des lamelles intérieures (41) et d'une pièce secondaire (50) supportant des lamelles extérieures (51), **caractérisée en ce que** la pièce secondaire (50) est reliée, au niveau construction, au premier élément (60) de la transmission coaxiale respective (28, 29).

3. Unité de transmission différentielle selon la revendication 2, **caractérisée en ce que** la pièce secondaire (50) de l'embrayage (26, 27) forme une cloche (52, 52'), à la pièce normale à l'axe (52) de laquelle se raccorde la transmission coaxiale respective (28, 29) et que l'anneau denté (62) présente, sur son côté détourné de l'embrayage (26, 27), une collerette (63) qui est montée dans le boîtier (4).

4. Unité de transmission différentielle selon la revendication 3, **caractérisée en ce que** la collerette (63) de l'anneau denté (62) est elle-même un anneau d'appui d'un palier à roulement (64).

5. Unité de transmission différentielle selon la revendication 1, **caractérisée en ce que** les transmissions coaxiales (28, 29) sont réalisées avec leurs pièces de paroi adjacentes (4, 52) sous forme de pompes à huile de roue dentée.

6. Unité de transmission différentielle selon la revendication 5, **caractérisée en ce que** les transmissions coaxiales (28, 29) comportent, entre le premier (60) et/ou le deuxième élément (61) et l'anneau denté (62), un îlot en forme de faucille (75) et que, dans une partie adjacente du boîtier (4), il est prévu deux ouvertures (76, 77) dont partent des canaux à huile (80, 87), un premier canal (87) servant à l'apport d'huile depuis un bac à huile (86) et un deuxième canal (80) qui établit directement ou indirectement une liaison avec l'embrayage respectif (26, 27).

7. Unité de transmission différentielle selon la revendication 6, **caractérisée en ce que** l'îlot en forme de faucille (75) est formé entre le deuxième élément (61) et l'anneau denté (62) et est fixé au boîtier (4).
